# EUROPEAN PATENT SPECIFICATION

(11) **EP 1 689 571 B1**
(45) Date of publication and mention of the grant of the patent: **04.07.2007**
(21) Application number: 04799004.9
(22) Date of filing: 29.11.2004
(51) Int. Cl.: B29C 44/12

(54) **PROCESS FOR MAKING INTEGRAL ELASTIC SUPPORTS AND SUPPORT OBTAINABLE BY SAID PROCESS**
VERFAHREN ZUR HERSTELLUNG VON INTEGRALEN ELASTISCHEN STÜTZEN UND DURCH DAS VERFAHREN ZU ERHALTENDE STÜTZE
PROCEDE DE FABRICATION DE SUPPORTS ELASTIQUES MONOBLOCS ET SUPPORTS AINSI OBTENUS

(30) Priority: 27.11.2003 IT VI20030236
(43) Date of publication of application: 16.08.2006
(73) Proprietor: SELLE ROYAL S.P.A., 36050 Pozzoleone (Vicenza) (IT)
(72) Inventor: TOMEO, Stefano, I-35010 San Pietro in Gù (IT)
(74) Representative: Vannini, Mario
(86) International application number: PCT/IB2004/003902
(87) International publication number: WO 2005/051629

(56) References cited:
- DE-A1- 2 256 974
- DE-C1- 4 300 376
- FR-A- 2 368 394
- US-A- 5 895 613
- US-B1- 6 499 797
- PATENT ABSTRACTS OF JAPAN vol. 1998, no. 02, 30 January 1998 (1998-01-30) & JP 09 262845 A (NISHIKAWA KASEI CO LTD), 7 October 1997 (1997-10-07)

## Description

### Field of the Invention

The present invention is generally applicable to the field of human body supports and particularly relates to a process for making integral elastic supports as well as to a support obtainable by such process.

The support according to the invention may be advantageously used as a component for the construction of vehicles, such as bicycles and motorcycles, but for pieces of furniture as well, such as chair seats and seat backs, stools and the like.

### Prior art

A number of embodiments of saddles for bicycles or similar vehicles have an essentially rigid shell and a flexible covering that defines a seating surface. Also, one or more resilient filler layers are typically interposed between the covering and the shell.

US-A-6066277, US-A-2003164629, WO-A-9937459 disclose similar processes for making a saddle which include at least one filler layer molding step. Particularly, each process provides prior construction of a rigid shell and the introduction thereof into a mold. This latter has an essentially convex portion which is adapted to support the shell and an essentially concave portion which is adapted to receive the filler layer material. Once the mold has been closed, with the shell therein, the material is caused to expand to form the filler layers, which are typically composed of one or more foam materials. Finally, the assembly thus obtained is removed from the mold.

An apparent drawback of this arrangement is that, while foam materials are being expanded, they not only properly deposit on the shell, but may also extend beyond the peripheral edge of the shell, and irregularly insinuates between the shell and the mold, thereby forming burrs. This is caused by a difference in size and shape tolerances between the shell and the mold, and is facilitated by the pressure exerted by foam materials during expansion.

Burrs generally have an irregular shape and might affect the aesthetic quality of the saddle. Therefore, an additional step is required for finishing the peripheral edges of the molded assembly, which causes an increase of manufacturing costs. Furthermore, the finishing step is generally carried out manually by an operator, which makes it particularly slow and expensive.

Another drawback of the above arrangements lies in that the filler layer portions in the proximity of the peripheral edge of the shell are exposed to fast wear and may be easily torn off. These peripheral portions of the filler layers generally have a comparatively little thickness and are repeatedly pressed against the rigid shell during use.

Yet, further processes are known for making saddles as described above. For instance, US-A-6116684 discloses a process in which two essentially flat laminated layers of materials are provided, having different rigidities. Two appropriately shaped portions are cut out of these flat laminated layers, to be subsequently heated and introduced, in overlapped relationship, into a mold. In a molding step the two portions are conformed and joined together, thereby essentially providing the final shape of the saddle.

US-A-6409865 discloses a similar process, wherein the filler layer is first molded, whereupon a separate shell is heated and joined to such filler layer.

By using pre-shaped and pre-cut portions or by joining the shell and the pre-molded filler layer by heat, peripheral edge burrs may be reduced, but this involves the apparent disadvantage of a dramatic increase of manufacturing costs. In fact, the above processes include both at least one additional step for separately making the filler layer, wherefore auxiliary equipment is needed.

Another drawback associated with separate fabrication of the shell and the filler layer is that the attachment therebetween may be partial and defective, thereby affecting the performance of the finished saddle.

DE-C1-4300376 on which is based the preamble of claim 1, discloses a method for manufacturing a cushioned seat with areas of different hardness. In this known method a foamable resin is introduced in the mould before forming the shell and the upper surface of the expanded resin delimits the moulding space for the shell.

### Summary of the invention

A primary object of this invention is to obviate the above drawbacks, while providing a cost-effective process and a cost-effective support structure.

A particular object is to provide a process that ensures high quality of finished products, as well as relatively short manufacturing times.

A further object of the invention is to provide a process that allows to simplify fabrication and reduce manpower requirements, by at least partly suppressing manual operations.

Another particular object of the invention is to provide a support structure that is particularly comfortable during use.

Yet another object is to provide a support structure which maintains its features unchanged with time, and is less exposed to wear or scratching.

These objects, as well as others which will be more apparent hereafter, are achieved by providing a process for making integral elastic supports, according to claim 1.

Thanks to this particular sequence of steps, any gap between the shell and the inner cavity in the proximity of said peripheral edge will be filled and the formation of burrs as the foamable resin is foamed will be avoided. In such a manner, a high quality support may be obtained, and manual operations may be reduced in the process, whereby manufacturing times and manpower requirements are also reduced.

According to another aspect of the invention an integral elastic support is provided, according to claim 10.

### Brief Description of the Drawings

Further features and advantages of the invention will be more apparent from the detailed description of a few preferred, non-exclusive embodiments of a process and a support according to the invention, which are described as nonlimiting examples with the aid of the annexed drawings, in which:
FIG. 1 is a sectional view of the equipment that is used in one embodiment of the inventive process;
FIG. 2 is a sectional view of an integral elastic support according to the invention;

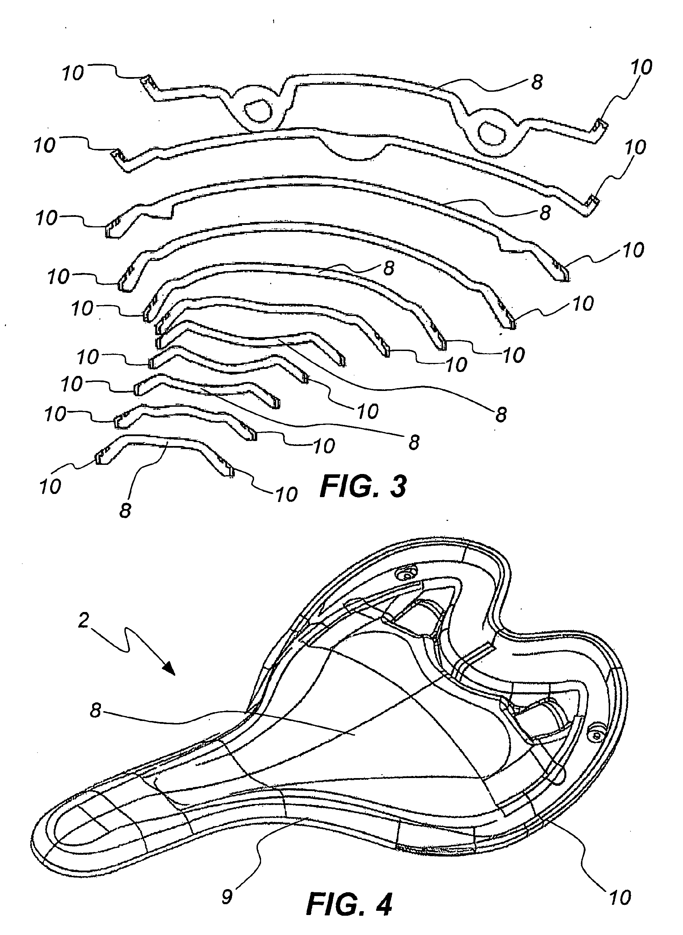

FIG. 3 shows a plurality of sections, as taken along parallel planes, of a component of the support of Fig. 2;
FIG. 4 is a perspective view of a component of the support of FIG. 2;
FIG. 5 is a sectional view of the equipment that is used in a further embodiment of the inventive process.

### Detailed description of a preferred embodiment

Particularly referring to the above figures, a process for making an integral elastic support according to the invention is described, which is generally designated with numeral 1. Various supports 1 may be obtained by the process described below, such as chair seats, seat backs, arm rests, saddles and seats for bicycles and similar vehicles.

In greater detail, each support 1 comprises an essentially rigid or semirigid shell 2 and at least one layer 3 of a resilient filler. A cover 4 may be provided, which is designed to come in contact with a user, and defines a user contact surface 4'. Alternatively, the filler layer 3, with an adequate surface finish, might directly define a user contact surface 4'.

The process of the invention includes a first step a) in which the shell 2 is formed, with predetermined shape and structure. In a second step b), a mold 5 is set up, for forming the filler layer 3 on the shell 2. To this end, the mold 5 has at least one inner cavity 6 which has such shape and size as that the shell 2 may be received therein, and partly occupy the space thereof. In use, the inner cavity 6 may be moved from an open condition to a closed condition.

In a third step c), at least one foamable resin is introduced, together with the shell 2, into the inner cavity 6 of the mold 5. Then, in a fourth step d), the foamable resin is foamed to fill the inner cavity 6 and form the filler layer 3, to be joined with the shell 2 into a single assembly 7. Also, the foamable resin may be a polymeric resin, preferably a polyurethane resin.

Such foamable resin may be introduced into the mold 5 before or after the shell 2, but the foaming step is preferably carried out when both the shell 2 and the resin are within the mold 5.

Particularly, in a first embodiment, the resin is injected into the inner cavity 6 of the mold 5, when the shell 2 has already been introduced therein and the cavity 6 is in the closed condition.

Alternatively, in a second embodiment the resin is cast into the inner cavity 6 of the mold 5, before introducing the shell 2 therein and with the cavity 6 in the open condition.

In a further step e), the assembly 7 is removed from the mold 5.

A peculiar feature of the invention is that the shell 2 is manufactured in a first step a1) for making a main body 8 having a peripheral edge and a second step a2) for making a sealing member 10 in the proximity of the peripheral edge 9. Thus, the sealing member 10 essentially closes any gap between the shell 2 and the inner cavity 6 in the proximity of the peripheral edge 9 and prevents the formation of burrs as the foamable resin is foamed.

In order to obtain an easily handled and sturdy shell 2, the sealing member 10 may be hot-molded from a moldable material in the proximity of the peripheral edge 9. Thanks to this material molding step, the sealing member 10 may be essentially integral with the main body 8, which considerably limits the possibility that the sealing member 10 may be wholly or partly detached when the integral elastic support 1 is being fabricated and used.

Also, the moldable material of the sealing member 10 may be differentiated from the base material of the main body 8 in such a manner as to meet the different structural needs and functional requirements of the sealing member 10 and the main body 8. Particularly, this latter may have a comparatively high rigidity, whereas the sealing member 10 may be comparatively flexible. For proper molding of the sealing member 10, the moldable material may be selected amongst the materials that are chemically compatible with the base material of the main body 8. In greater detail, the moldable material may be of the polymeric type, preferably a thermoplastic rubber, which exhibits resiliency at the operating temperature and during foaming.

The mold 5 may comprise a female element 11, which reproduces the negative shape of the user contact surface 4' and a male element 12 for supporting the shell 2. The female element 11 and the male element 12 are designed to be mutually coupled at a junction zone 13. They may be also spaced apart to move the inner cavity 6 into the open condition or be driven close together until they are joined at the junction zone 13 to move the inner cavity 6 into the closed condition.

According to a particular embodiment of the inventive process, when the inner cavity 6 is in the open condition, the shell 2 is mounted on the male element 12, and the resin is cast, preferably into the female element 11. Then, the female element 11 and the male element 12 are brought close together, thereby completing the introduction of the shell into the inner cavity 6.

In a further embodiment of the inventive process, the shell 2 is mounted on the male element 12 with the inner cavity 6 in the open condition and the female and male elements 11, 12 are driven close together until the inner cavity 6 is moved to the closed condition. Then, the foamable resin is injected therein and foamed.

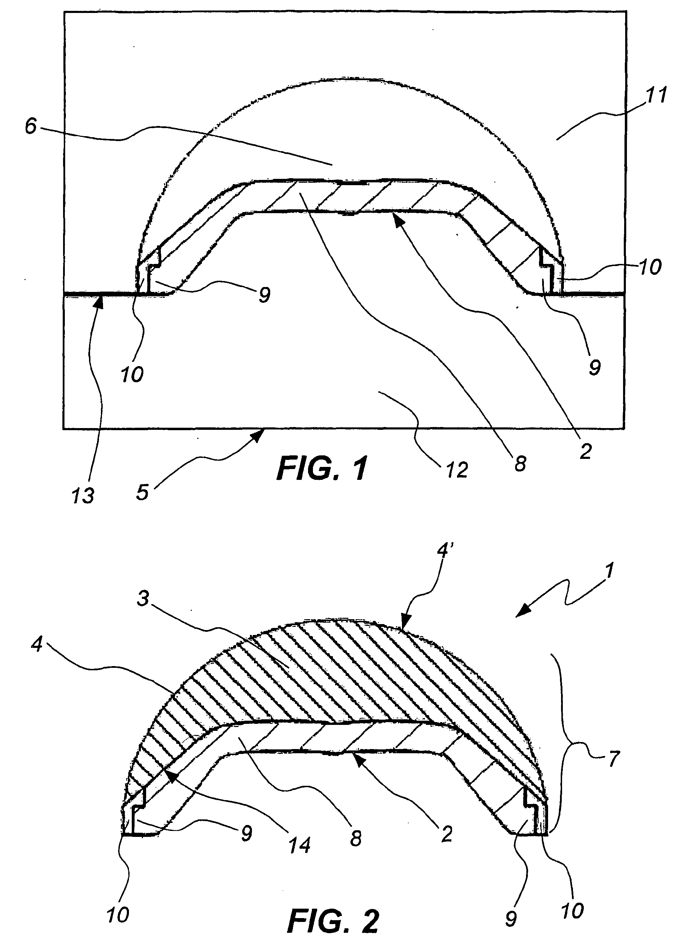

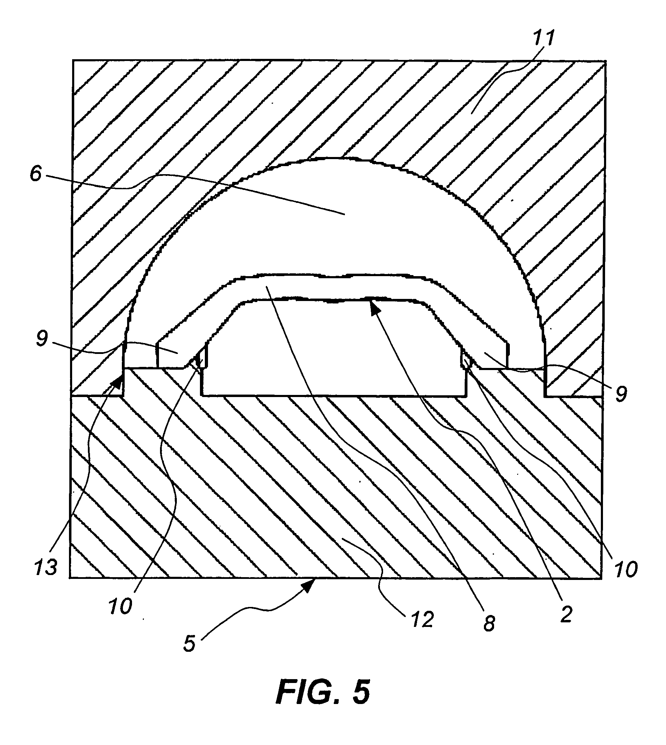

The shell 2 may be coupled to the male element 12 in such a manner that the sealing member 10 is located in the proximity of the junction zone 13. Furthermore, while the foamable resin is being foamed, the sealing member 10 may be at least partly locked against the female element 11 as shown in FIG. 1, or against the male element 12, as shown in FIG. 5. This particular arrangement will maximize the effectiveness of the sealing member 10 in filling any gap between the shell 2 and the inner cavity 6 in the proximity of the peripheral edge 9.

The above process provides an integral elastic support 1 that may be advantageously used for chair seats, seat backs, arm rests, bicycle saddles and vehicle seats and the like.

The support 1 comprises a shell 2 made of an essentially rigid or semirigid base material and at least one layer 3 of a resilient filler, which is joined to the shell 2. A cover 4 may be further provided above the filler layer 3. The support 1 has a surface of contact 4' with a user, which may be defined by the cover 4 or directly by an adequately surface-treated filler layer 3.

A peculiar features of the support 1 according to the invention is that the shell 2 comprises a main body 8 made of a comparatively rigid or semi-rigid base material, and having a peripheral edge 9 in the proximity of a junction zone 14 between the shell 2 and the filler layer 3. The shell 2 further comprises a sealing member 10 made of a comparatively flexible material, which is formed in the proximity of the peripheral edge 9 to prevent imperfections at the junction zone 14.

The elasticity of the sealing member 10 reduces the occurrence of damages to the covering 4 and/or the filler layer 3. In fact, the pressure cyclically and constantly exerted by the user on the user contact surface 4' is at least partly absorbed by the elastic deformation of the sealing member 10. Without the latter, the cover 4 and/or the filler layer 3 would be directly pressed against the rigid or semi-rigid shell 2 and would be quickly damaged due to fretting. More particularly, the sealing member 10 may be essentially integral with the main body 8, thereby providing a particularly strong connection therebetween and perfect preservation of the functional characteristics of the support 1 with time.

Advantageously, the comparatively flexible material of the sealing member 10 may be a thermoplastic polymeric elastomer, whereas the comparatively rigid or semi-rigid base material of the main body 8 may be of various types. Preferably, the material of the main body 8 may be of the polymeric type, such as polypropylene, ABS, nylon, possibly reinforced with various fillers, such as carbon or glass fibers or the like. Suitably, the material of the main body 8 may also be a metal or ligneous material.

From the above disclosure, the process and support of the invention prove to achieve the proposed objects and particularly provide a high quality and long-lasting final product with lower manpower requirements and manufacturing costs.

The process and support of this invention are susceptible to a number of changes or variants, within the inventive concept disclosed in the annexed claims. All the details thereof may be replaced by other technically equivalent parts, and the materials may vary depending on different needs, without departure from the scope of the invention.

While the process and support have been described with particular reference to the accompanying figures, the numerals referred to in the disclosure and claims are only used for the sake of a better intelligibility of the invention and shall not be intended to limit the claimed scope in any manner.

## Claims

1. A process for making integral elastic supports, such as chair seats, seat backs, arm rests, bicycle saddles and vehicle seats and the like, wherein each support (1) is comprised of a shell (2) made of a first material and at least one resilient filler layer (3), said first material being rigid or semi-rigid as compared with said resilient filler layer, and a user contact surface (4'), wherein the process includes the following steps:
a) making a shell (2) with a predetermined shape and structure;
b) setting up a mold (5) with at least one inner cavity (6) which is movable from an open condition to a closed condition;
c) introducing at least one foamable resin and said shell (2) into the inner cavity (6) of said mold (5);
d) foaming said resin to form said resilient filler layer (3) to be joined to the shell (2) into a single assembly (7);
e) removing said assembly (7) from the mold (5);
**characterized in that** said foamable resin is introduced into said inner cavity (6) of said mold (5) after that said shell (2) has already been formed and introduced therein, and **in that** said shell (2) is made in two parts and in two separate steps, a first step (a1) for making, with said first material, a main body (8) having a peripheral edge (9) and a second step (a2) for making, with a second material, a sealing member (10) in the proximity of said peripheral edge (9), said second material being different from said first material and provided with resiliency at the operating temperature and during foaming of, said foamable resin so as to close any gap between said shell (2) and said inner cavity (6) in the proximity of said peripheral edge (9) and to prevent the formation of burrs as the foamable resin is foamed.

2. A process as claimed in claim 1, **characterized in that** said second material is moldable and chemically compatible with said first material forming said main body (8), said peripheral sealing member (10) being hot-molded on said main body (8) in the proximity of said peripheral edge (9) so that said sealing member (10) may be integral with said main body (8).

3. A process as claimed in claim 1, **characterized in that** said mold (5) comprises a female element (11) reproducing the negative shape of the user contact surface (4') and a male element (12) for supporting said shell (2), said elements (11, 12) being designed to be mutually coupled at a junction zone (13) to define said inner cavity (6).

4. A process as claimed in claim 3, **characterized in that** said shell (2) is coupled to said male element (12) so that said sealing member (10) is located in the proximity of said junction zone (13).

5. A process as claimed in claim 4, **characterized in that** said sealing member (10) is at least partly locked against said female element (11) during said foaming step.

6. A process as claimed in claim 4, **characterized in that** said sealing member (10) is at least partly locked against said male element (12) during said foaming step.

7. A process as claimed in claim 2, **characterized in that** said moldable material is of the polymeric type.

8. A process as claimed in claim 1, **characterized in that** said resin is injected into the inner cavity (6) of said mold (5), when said cavity (6) is in the closed condition.

9. A process as claimed in claim 1, **characterized in that** said user contact surface (4') is defined by a cover (4), respectively by an adequate surface finish of said filler layer (3).

10. An integral elastic support, such as chair seats, seat backs, arm rests, bicycle saddles and vehicle seats and the like, obtainable by the process as claimed in one or more of the preceding claims, comprising a shell (2) made of a first material, at least one layer made of a resilient filler (3) which is joined to said shell (2), and a user contact surface (4'), wherein said first material is rigid or semi-rigid as compared with said resilient filler (3), **characterized in that** said shell (2) is comprised of two parts, a main body (8) made of said first material and having a peripheral edge (9, and a sealing member (10) made in a second material and located in the proximity of said peripheral edge (9), said second material being different from said first material and provided with resiliency at the operating temperature so as to close any gap between said shell (2) and said inner cavity (6) in the proximity of said peripheral edge (9) and to prevent the formation of burrs as the foamable resin is foamed.

11. An integral elastic support as claimed in claim 10, **characterized in that** said sealing member (10) is integral with said main body (8).

12. An integral elastic support as claimed in claim 11, **characterized in that** said second material forming said sealing member (10) is a thermoplastic polymeric elastomer.

13. An integral elastic support as claimed in claim 11, **characterized in that** said first material forming said main body (8) is a polymeric, metallic or ligneous material.

## Patentansprüche

1. Verfahren zur Herstellung von integralen elastischen Stützen, wie zum Beispiel von Stuhlsitzen, Sitzlehnen, Armstützen, Fahrradsattel und Fahrzeugsitzen und ähnlichem, wobei jede Stütze (1) eine Schale (2), die aus einem ersten Material hergestellt ist und mindestens eine nachgiebige Füllschicht (3) aufweist, wobei das erste Material steif oder halbsteif ist verglichen mit der nachgiebigen Füllschicht (3) und eine Nutzer-Anlagefläche (4') aufweist, wobei das Verfahren die folgenden Schritte umfasst:
a) Herstellen einer Schale (2) mit einer vorbestimmten Form und Struktur,
b) Ausgestalten einer Form (5) mit mindestens einer inneren Öffnung (6), die beweglich ist von einem offenen Zustand zu einem geschlossenen Zustand,
c) Einführen von mindestens einem schäumbaren Kunststoff und der Schale (2) in die innere Öffnung (6) der Form (5),
d) Schäumen des Kunststoffs zur Bildung der nachgiebigen Füllschicht (3), die zu verbinden ist mit der Schale (2) zu einer einzigen Einheit (7),
e) Entfernen der Einheit (7) aus der Form (5),
**dadurch gekennzeichnet, dass** der schäumbare Kunststoff in die innere Öffnung (6) der Form (5) eingeführt wird nachdem die Schale (2) bereits gebildet und darin eingeführt wurde, und indem die Schale (2) in zwei Teilen und in zwei getrennten Schritten gefertigt wird, einem ersten Schritt (a1) zur Herstellung mit dem ersten Material eines Hauptkörpers (8) mit einem Umfangsrand (9) und einem zweiten Schritt (a2) zur Herstellung eines Dichtelements (10) mit einem zweiten Material in der Nähe von dem Umfangsrand (9), wobei das zweite Material anders ist als das erste Material und mit einer Elastizität versehen ist bei der Betriebstemperatur und während des Schäumens des schäumbaren Kunststoffs, um so jeden Spalt zu schließen zwischen der Schale (2) und der inneren Öffnung (6) in der Nähe von dem Umfangsrand (9) und um die Bildung von Graten zu verhindern, wenn der schäumbare Kunststoff geschäumt wird.

2. Verfahren gemäß Anspruch 1, **dadurch gekennzeichnet, dass** das zweite Material formbar ist und chemisch verträglich mit dem ersten Material, das den Hauptkörper (8) bildet, wobei das Dichtelement (10) am Umfangsrand heiß gegossen wird auf den Hauptkörper (8) in der Nähe von dem Umfangsrand (9), so dass das Dichtelement (10) einteilig sein kann mit dem Hauptkörper (8).

3. Verfahren gemäß Anspruch 1, **dadurch gekennzeichnet, dass** die Form (5) ein weibliches Element (11) aufweist, das die negative Form der Nutzer-Anlagefläche (4') wiedergibt und ein männliches Element (12) zur Stütze der Schale (2), wobei die Elemente (11, 12) so ausgebildet sind, dass sie gegenseitig kuppelbar sind an einem Verbindungsbereich (13), um die innere Öffnung (6) zu bilden.

4. Verfahren gemäß Anspruch 3, **dadurch gekennzeichnet, dass** die Schale (2) verbunden ist mit dem männlichen Element (12), so dass das Dichtelement (10) in der Nähe von dem Verbindungsbereich (13) angeordnet ist.

5. Verfahren gemäß Anspruch 4, **dadurch gekennzeichnet, dass** das Dichtelement (10) zumindest teilweise verriegelt ist mit dem weiblichen Element (11) während des Schritts des Schäumens.

6. Verfahren gemäß Anspruch 4, **dadurch gekennzeichnet, dass** das Dichtelement (10) zumindest teilweise verriegelt ist mit dem männlichen Element (12) während des Schritts des Schäumens.

7. Verfahren gemäß Anspruch 2, **dadurch gekennzeichnet, dass** das Gießmaterial ein Polymer ist.

8. Verfahren gemäß Anspruch 1, **dadurch gekennzeichnet, dass** der Kunststoff in die innere Öffnung (6) der Form (5) eingeführt wird, wenn die Öffnung (6) in dem geschlossenen Zustand ist.

9. Verfahren gemäß Anspruch 1, **dadurch gekennzeichnet, dass** die Nutzer-Anlagefläche (4') bestimmt ist durch einen Deckel (4), beziehungsweise durch eine entsprechende Bearbeitung der Oberfläche der Füllschicht (3).

10. Integrale elastische Stütze, wie zum Beispiel Stuhlsitze, Sitzlehnen, Armstützen, Fahrradsattel und Fahrzeugsitze und ähnliches, die erhalten werden können durch ein Verfahren gemäß einem oder mehreren der vorhergehenden Ansprüche, mit einer Schale (2), die aus einem ersten Material hergestellt ist, mindestens einer Schicht, die aus einem nachgiebigen Füllstoff (3) hergestellt ist, der mit der Schale (2) verbunden ist und einer Nutzer-Anlagefläche (4'), wobei das erste Material steif oder halbsteif ist verglichen mit der nachgiebigen Füllschicht (3),
**dadurch gekennzeichnet, dass** die Schale (2) zwei Teile aufweist, einen Hauptkörper (8) aus einem ersten Material und mit einem Umfangsrand (9) und ein Dichtelement (10) aus einem zweiten Material und angeordnet in der Nähe von dem Umfangsrand (9), wobei das zweite Material anders ist als das erste Material und mit einer Elastizität versehen ist bei der Betriebstemperatur, um so jeden Spalt zu schließen zwischen der Schale (2) und der inneren Öffnung (6) in der Nähe von dem Umfangsrand (9) und um die Bildung von Graten zu verhindern, wenn der schäumbare Kunststoff geschäumt wird.

11. Integrale elastische Stütze gemäß Anspruch 10, **dadurch gekennzeichnet, dass** das Dichtelement (10) einteilig ist mit dem Hauptkörper (8).

12. Integrale elastische Stütze gemäß Anspruch 11, **dadurch gekennzeichnet, dass** das zweite Material, das das Dichtelement (10) bildet, ein thermoplastisches, polymeres Elastomer ist.

13. Integrale elastische Stütze gemäß Anspruch 11, **dadurch gekennzeichnet, dass** das erste Material, das den Hauptkörper (8) bildet, ein polymeres, metallisches oder holzartiges Material ist.

## Revendications

1. Procédé pour fabriquer des supports élastiques d'un seul tenant tels que des assises de chaises, des dossiers de chaises, des accoudoirs, des selles de bicyclettes et des sièges de véhicules et analogues, dans lequel chaque support (1) est composé d'une coque (2) faite d'une première matière et d'au moins une couche de remplissage élastique (3), ladite première matière étant rigide ou semi-rigide, comparativement à ladite couche de remplissage élastique, et d'une surface de contact avec l'utilisateur (4'), le procédé comprenant les étapes suivantes :
a) fabriquer une coque (2) ayant une forme et une structure prédéterminées ;
b) réaliser un moule (5) ayant au moins une cavité intérieure (6) qui peut passer d'un état ouvert à un état fermé;
c) introduire au moins une résine pouvant être transformée en mousse et ladite coque (2) dans la cavité intérieure (6) dudit moule (5) ;
d) transformer ladite résine en mousse pour former ladite couche de remplissage élastique (3) qu'il s'agit de réunir à la coque (2) pour former un seul ensemble (7) ;
e) retirer ledit ensemble (7) dudit moule (5);
**caractérisé en ce que** ladite résine pouvant être transformée en mousse est introduite dans ladite cavité intérieure (6) dudit moule (5) après que ladite coque (2) a déjà été formée et introduite dans ce moule ; et **en ce que** ladite coque est faite en deux parties et en deux étapes séparées, une première étape (a1) pour fabriquer, avec ladite première matière, un corps principal (8) ayant un bord périphérique (9) et une seconde étape (a2) pour fabriquer, avec une seconde matière, un élément de fermeture étanche (10) à proximité dudit bord périphérique (9), ladite seconde matière étant différente de ladite première matière, et dotée d'élasticité à la température de travail et pendant la transformation en mousse de ladite résine pouvant être transformée en mousse, de manière à fermer l'espace libre éventuel entre ladite coque (2) et ladite cavité intérieure (6) à proximité dudit bord périphérique (9) et à empêcher la formation de bavures lors de la transformation en mousse de la résine pouvant être transformée en mousse.

2. Procédé selon la revendication 1, **caractérisé en ce que** ladite seconde matière est moulable et chimiquement compatible avec ladite première matière formant ledit corps principal (8), ledit élément de fermeture étanche périphérique (10) étant moulé à chaud sur ledit corps principal (8) à proximité dudit bord périphérique (9), de sorte que ledit élément de fermeture étanche (10) peut être d'un seul tenant avec ledit corps principal (8).

3. Procédé selon la revendication 1, **caractérisé en ce que** ledit moule (5) comprend un élément femelle (11) qui reproduit la forme négative de la surface de contact avec l'utilisateur (4') et un élément mâle (12) destiné à supporter ladite coque (2), lesdits éléments (11, 12) étant conçus de manière à être accouplés l'un à l'autre dans une zone de jonction (13) pour définir ladite cavité intérieure (6).

4. Procédé selon la revendication 3, **caractérisé en ce que** ladite coque (2) est accouplée audit élément mâle (12) de telle manière que ledit élément de fermeture étanche (10) est situé à proximité de ladite zone de jonction (13).

5. Procédé selon la revendication 4, **caractérisé en ce que** ledit élément de fermeture étanche (10) est au moins partiellement verrouillé contre ledit élément femelle (11) pendant ladite étape de transformation en mousse.

6. Procédé selon la revendication 4, **caractérisé en ce que** ledit élément de fermeture étanche (10) est au moins partiellement verrouillé contre ledit élément mâle (12) pendant ladite étape de transformation en mousse.

7. Procédé selon la revendication 2, **caractérisé en ce que** ladite matière moulable est du type polymère.

8. Procédé selon la revendication 1, **caractérisé en ce que** ladite résine est injectée dans la cavité intérieure (6) dudit moule (5) lorsque ladite cavité (6) est à l'état fermé.

9. Procédé selon la revendication 1, **caractérisé en ce que** ladite surface de contact avec l'utilisateur (4') est définie par un revêtement (4), respectivement par un fini superficiel adéquat de ladite couche de remplissage (3).

10. Support élastique d'un seul tenant tel que des assises de chaises, dossiers de sièges, accoudoirs, selles de bicyclettes et analogues, qui peut être obtenu par le procédé selon une ou plusieurs des revendications précédentes, comprenant une coque (2) faite d'une première matière, au moins une couche faite d'un remplissage élastique (3) qui est réunie à ladite coque (2), et une surface de contact avec l'utilisateur (4'), dans lequel ladite première matière est rigide ou semi-rigide, comparativement audit remplissage élastique (3), **caractérisé en ce que** ladite coque (2) est composée de deux parties, un corps principal (8) fait de ladite première matière et ayant un bord périphérique (9), et un élément de fermeture étanche (10) fait d'une seconde matière et situé à proximité du bord périphérique (9), ladite seconde matière étant différente de ladite première matière, et dotée d'élasticité à la température de travail de manière à fermer l'éventuel espace libre entre ladite coque (2) et ladite cavité intérieure (6) à proximité dudit bord périphérique (9) et pour empêcher la formation de bavures lors de la transformation en mousse de la résine pouvant être transformée en mousse.

11. Support élastique d'un seul tenant selon la revendication 10, **caractérisé en ce que** ledit élément de fermeture étanche (10) est d'une seule pièce avec ledit corps principal (8).

12. Support élastique d'un seul tenant selon la revendication 11, **caractérisé en ce que** ladite seconde matière qui forme ledit élément de fermeture étanche (10) est un élastomère polymère thermoplastique.

13. Support élastique d'un seul tenant selon la revendication 11, **caractérisé en ce que** ladite première matière qui forme ledit corps principal (8) est une matière polymère, métallique ou ligneuse.
